# EUROPEAN PATENT APPLICATION

(11) **EP 1 406 323 A2**
(43) Date of publication of application: **07.04.2004**
(21) Application number: 03001289.2
(22) Date of filing: 22.01.2003
(51) Int. Cl.: H01M 2/30

(54) **Terminal and battery containing said terminal**

(30) Priority: 05.08.2002 CN 02242749
(71) Applicant: CSB Battery Co., Ltd., Beitou Area, Taipei City (TW)
(72) Inventor: Chie, Bobby, San Diego, CA 92514-7632 (US); Chen, David, Taipei City, Taiwan R.O.C. (TW); Wang, Yu-Lung, Taipei City, Taiwan R.O.C. (TW); Lee, Shen-Hsiung, Taipei City, Taiwan R.O.C. (TW)
(74) Representative: UEXKÜLL & STOLBERG

(57) **Abstract**

The present invention provides a terminal, comprising the contact portion, the insert portion, the engaging portion, the joint portion for connecting the contact portion, insert portion and engaging portion, the stopper for fastening the contact portion, insert portion, or engaging portion on the middle cover of the battery; the contact portion provides external electric appliances with electrical connection through means of contact, the insert portion provides external electric appliances with electrical connection through means of insertion, the engaging portion fastens on the terminal post of the battery so as to transmit electricity from the battery by the joint portion to the contact portion and insert portion through the engaging portion; the present invention further provides a battery having the terminals, mainly utilizing a pair of the terminals as positive and negative electrodes, and the contact portions and the insert portions in a pair of the terminals are disposed on different sides of the battery, thus providing external electrical appliances the most convenient means of electrically connection through contact and insertion.

## Description

### BACKGROUND OF THE INVENTION

### FIELD OF THE INVENTION

The present invention relates to a terminal providing means of contact and insertion, and further relates to a battery utilizing a pair of the terminals as positive and negative electrodes.

### DESCRIPTION OF THE RELATED ARTS

Inasmuch as the ever-increasing pace of the quality of life in the post-modern world has been relentlessly kept, issues regarding pollution prevention, environmental protection and cherish and protection of natural resources are treated more and more seriously worldwide. As far as the use of batteries is concerned, one-time batteries, e.g., dry cells, are en route to be gradually replaced by second-time batteries that can be charged and recharged repeatedly, e.g., lead-acid batteries or Lithium―Ion batteries for the purpose of protecting the environment and cherishing natural resources.

The general VRLA (valve regulated lead-acid) batteries do provide repeated charging and recharging functions, yet the positive and negative electrodes of such batteries are designed to protrude out of the surface of the batteries, thus susceptible of causing short circuit.

Two Taiwan. UM Patents No. 84207560 and No. 84208100 respectively disclose a battery with terminals hidden inside and the terminals thereof, for the purpose of avoiding danger caused by short circuit, and further expediting the change of batteries. The foregoing battery terminals also allow not only common electrical wires, but also circuit boards to engage and connect. However, The foregoing means of providing circuit boards with functions of engaging and connecting is confined by the limitation that circuit boards can only be inserted vertically, and the cramped space is far from suitable for vertically inserting circuit boards. Therefore, the foregoing disclosure of terminals providing both common electrical wires and circuit boards to engage and connect thereto, and batteries having said terminals can no longer cope with the need to provide flexible space utilization.

### SUMMARY OF THE INVENTION

The primary object of the present invention is to provide a terminal at least comprising a contact portion, an insert portion, an engaging portion, a joint portion for connecting said contact portion, insert portion and engaging portion, and two stoppers for fastening said contact portion, insert portion, or engaging portion on the middle cover of the battery; said contact portion provides external electric appliances with electrical connection through means of contact, said insert portion provides external electric appliances with electrical connection through means of insertion, said engaging portion engages on the terminal post of the battery so that electricity can be transmitted from the battery by said joint portion to said contact portion and insert portion through said engaging portion.

The other object of the present invention is to provide a battery having said terminals, mainly utilizing a pair of said terminals as positive and negative electrodes, and the contact portions and insert portions in a pair of said terminals are disposed on different sides of the battery, thus providing external electrical appliances the most convenient means of electrical connection by contact and insertion.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Fig. 1A shows a top plan perspective view of the first terminal of the present invention;
Fig. 1 B shows a bottom plan perspective view of the first terminal of the present invention shown in Fig. 1A;
Fig. 2 shows a top plan perspective view of the second terminal of the present invention;
Fig. 3A shows a top plan view of the middle cover of the battery corresponding to the terminal of the present invention;
Fig. 3B shows a top plan perspective view of the middle cover of the battery shown in Fig. 3A;
Fig. 3C shows a top plan perspective view of placing the first and second terminals of the present invention into the middle cover of the battery shown in Fig. 3B; and
Fig. 4A, 4B and 4C show different embodiments of the battery having the first and second terminals of the present invention.

### DETAILED DESCRIPTION OF THE PREFERRED EMBODIMENTS

The following is a detailed description of the best presently known modes of carrying out the inventions. This description is not to be taken in a limiting sense, but is made merely for the purpose of illustrating the general principles of the inventions.

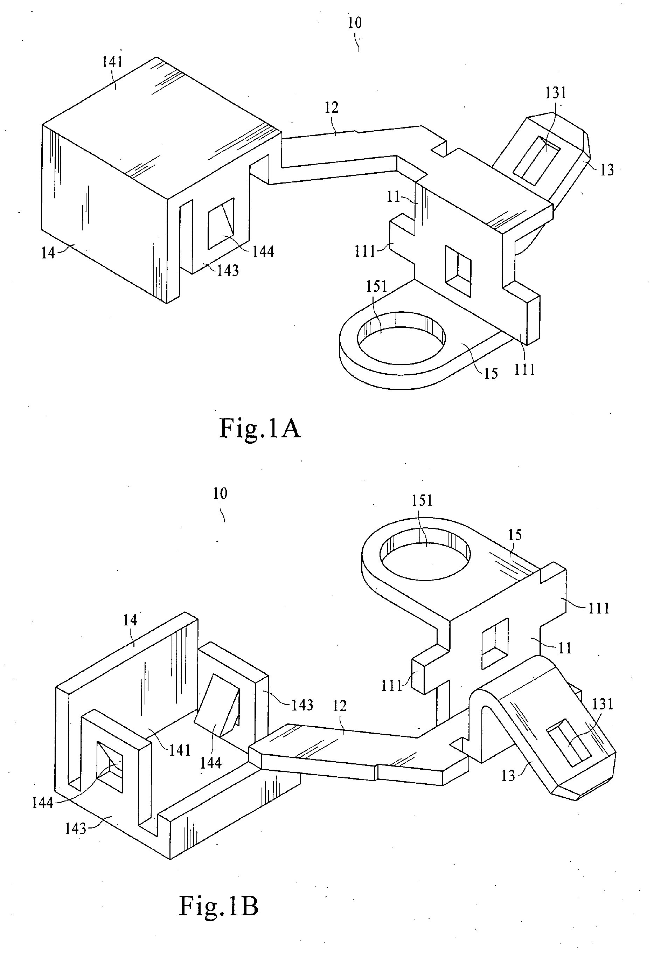

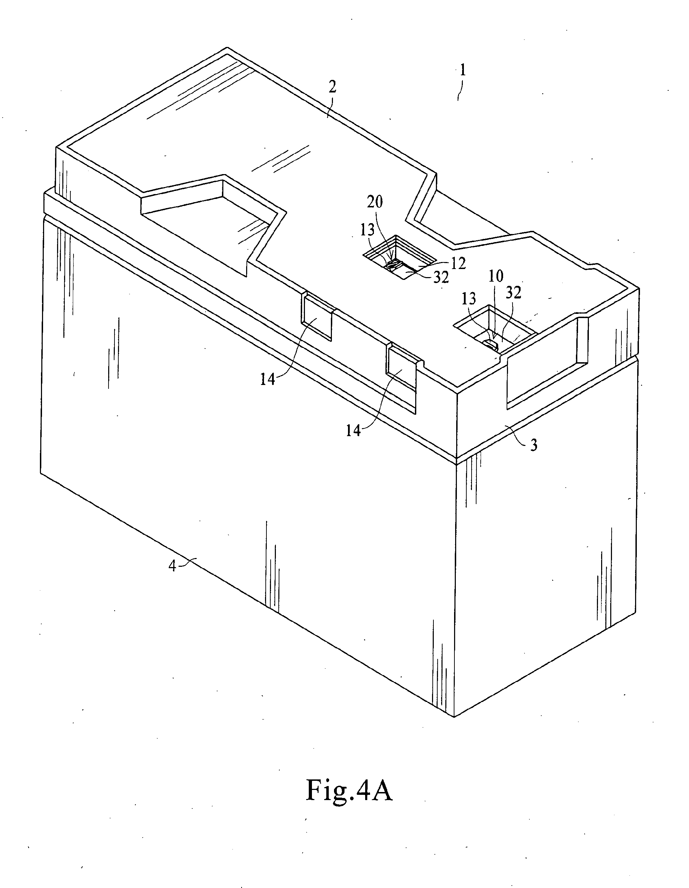

Fig. 1A and 1 B show the structure of the first terminal 10 of the present invention, wherein the first terminal 10 is utilized as the positive electrode terminal when disposed in the battery 1 (please refer to Fig. 4A to 4C) of the present invention.

As shown in Fig. 1A and 1B, the first terminal 10, integrally formed by conductive metal plate through stamping, comprises a contact portion 14, insert portion 13, engaging portion 15, and a joint portion 12 for connecting said contact portion 14, insert portion 13 and engaging portion 15.

To elaborate in more detail, a vertical wall 11 is formed on one side of one of the ends of the joint portion 12, with the left and right side at the bottom of the vertical wall 11 being extended outwards to form two stoppers 111 respectively, and with the very end of the vertical wall 11 being horizontally extended to form the engaging portion 15 perpendicular to the vertical wall 11; a round hole 151 is disposed on the engaging portion 15 for engaging onto the terminal post of the battery 1 (not shown in drawings); the insert portion 13 having the knock-out hole 131, formed at one end of the joint portion 12, is utilized for external electrical appliances to engage the insert portion 13 by means of insertion through electrical conducting wires thereof, thus forming an electrical connection. Disposed at the other end of the joint portion 12 are an upper contacting surface 141, wherefrom the contact portion 14 is vertically extended downwards, and a pair of side walls 143, wherein a pair of stoppers 144 are inwardly and protrusively installed respectively; the contact portion 14 is utilized for external electrical appliances to engage the contact portion 14 by means of contact through electrical contacting points thereof, thus forming an electrical connection.

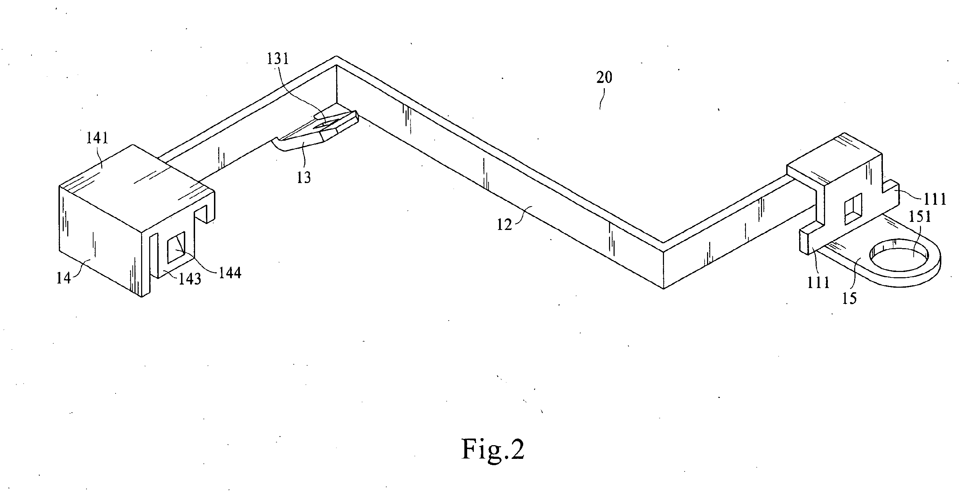

The structure of the second terminal 20 in the present invention is shown in Fig. 2, wherein the second terminal 20 is utilized as the negative electrode terminal when disposed in the battery 1 (please refer to Fig. 4A to 4C) of the present invention.

As shown in Fig. 2, the second terminal 20, integrally formed by conductive metal plate through stamping, also comprises, as first terminal 10, a contact portion 14, insert portion 13, engaging portion 15, and a joint portion 12 for connecting said contact portion 14, insert portion 13 and engaging portion 15. To elaborate in more detail, a vertical wall 11 is formed on one side of one of the ends of the joint portion 12, with the left and right side at the bottom of the vertical wall 11 being extended outwards to form two stoppers 111 respectively, and with the very end of the vertical wall 11 being horizontally extended to form the engaging portion 15 perpendicular to the vertical wall 11; a round hole 151 is disposed on the engaging portion 15 for engaging onto the terminal post of the battery 1 (not shown in drawings); the insert portion 13 having the knock-out hole 131, formed at one end of the joint portion 12, is utilized for external electrical appliances to engage the insert portion 13 by means of insertion through electrical conducting wires thereof, thus forming an electrical connection. Disposed at the other end of the joint portion 12 are an upper contacting surface 141, wherefrom the contact portion 14 is vertically extended downwards, and a pair of side walls 143, wherein a pair of stoppers 144 are inwardly and protrusively installed respectively; the contact portion 14 is utilized for external electrical appliances to engage the contact portion 14 by means of contact through electrical contacting points thereof, thus forming an electrical connection.

As far as the first terminal 10 and the second terminal 20 are concerned, the disposing positions for the two insert portions 13 of both are different, and the forms of bending for the two joint portions 12 are also different, mainly because different designs are needed for these two terminals to be disposed at different portions of the battery 1.

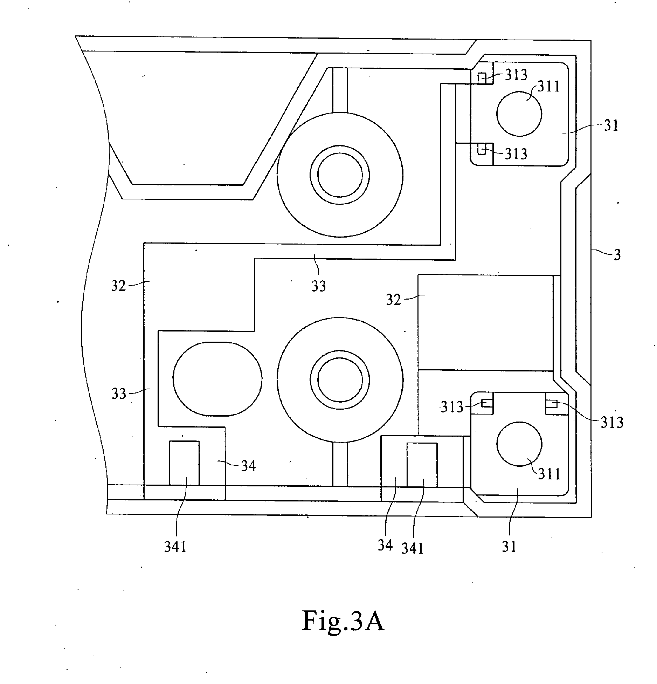

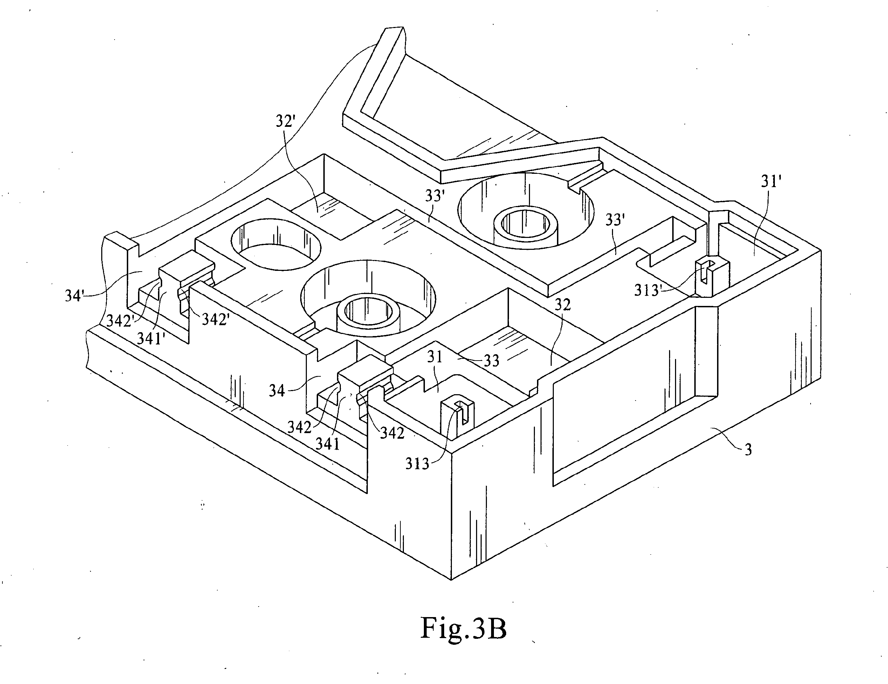

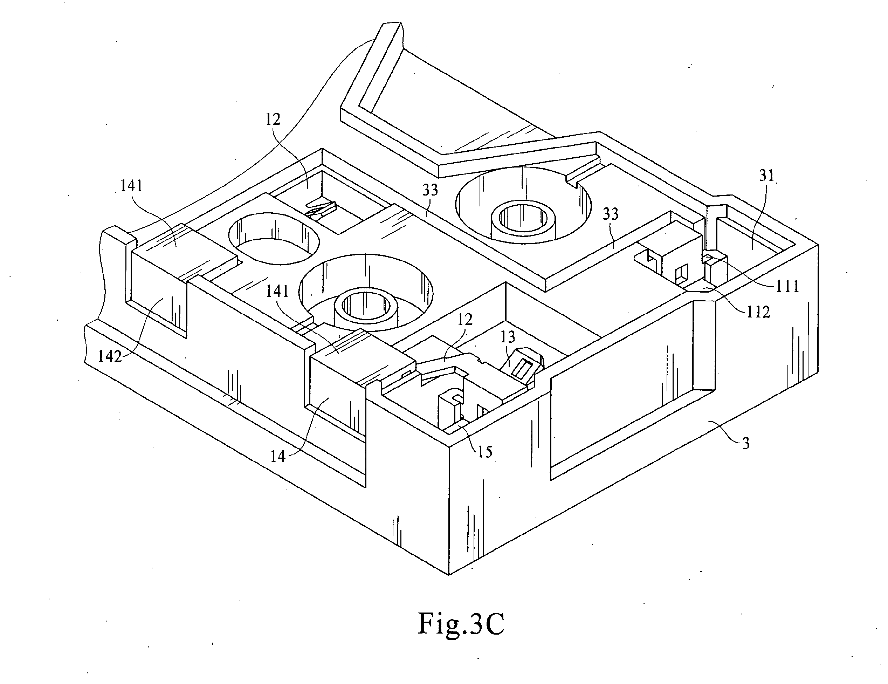

Please refer to Fig. 3A, 3B and 3C, wherein the middle cover 3 of the battery 1 in the present invention is utilized for placing the first terminal 10 and the second terminal 20.

To elaborate further, the middle cover 3 comprises an engaging portion groove 31, an insert portion groove 32, a joint portion groove 33 and a contact portion groove 34 utilized for containing the first terminal 10, and an engaging portion groove 31', an insert portion groove 32', a joint portion groove 33' and a contact portion groove 34' utilized for placing the second terminal 20. The engaging portion groove 31 is utilized for placing the engaging portion 15 of the first terminal 10, the insert portion groove 32 is utilized for placing the insert portion 13 of the first terminal 10, the joint portion groove 33 is utilized for placing the joint portion 12 of the first terminal 10, and the contact portion groove 34 is utilized for placing the contact portion 14 of the first terminal 10; the engaging portion groove 31' is utilized for placing the engaging portion 15 of the second terminal 20, the insert portion groove 32' is utilized for placing the insert portion 13 of the second terminal 20, the joint portion groove 33' is utilized for placing the joint portion 12 of the second terminal 20, and a contact portion groove 34' is utilized for placing the contact portion 14 of the second terminal 20.

The middle cover 3 further comprises a terminal post hole 311 at the bottom of the engaging portion groove 31, thus enabling terminal posts to pierce through and protrude in the engaging portion groove 31; then the first terminal 10, through encasing the terminal post by the round hole 151 of the engaging portion 15, is to engage the terminal post and thus transmit electricity of batteries to the contact portion 14 and the insert portion 13 through the engaging portion 15 and the joint portion 12. A pair of stopper grooves 313 is disposed in the engaging portion groove 31 so that a pair of stoppers 111 of the first terminal 10 can engage therein, whereby the engaging portion 15 is to be fixated for preventing any displacement. A stopping pole 341 having stopper grooves 342 on two sides thereof is disposed in the contact portion groove 34, thus when the contact portion 14 of the first terminal 10 is placed into the contact portion groove 34, the stopper 144 of the first terminal 10 is engaged in the stopper groove 342, thereby the contact portion 14 is fastened to prevent from any displacement.

Regarding the stopping and positioning structure of the second terminal 20, it is identical to that of the first terminal 10, which is, the middle cover 3 further comprises a terminal post hole 311' at the bottom of the engaging portion groove 31', thus enabling terminal posts to pierce through and protrude in the engaging portion groove 31'; then the second terminal 20, through encasing the terminal post by the round hole 151 of the engaging portion 15, is to engage the terminal post with the electricity from batteries being transmitted by the joint portion 12 to the contact portion 14 and the insert portion 13 through the engaging portion 15. A pair of stopper grooves 313' is disposed in the engaging portion groove 31' so that a pair of stoppers 111 of the second terminal 20 can engage therein, whereby the engaging portion 15 is to be fixated for preventing any displacement. A stopping pole 341' having stopper grooves 342' on two sides thereof is disposed in the contact portion groove 34', thus when the contact portion 14 of the second terminal 20 is placed into the contact portion groove 34', the stopper 144 of the second terminal 20 is engaged in the stopper groove 342', thereby the contact portion 14 is fastened to prevent from any displacement.

The battery 1 having the first terminal 10 and the second terminal 20 shown in Fig. 4A is formed through engaging and positioning the first terminal 10 as positive electrode and the second terminal 20 as negative electrode at the corresponding position to the middle cover 3 on top of the main body 4 in the battery 1, and then covering thereon the top cover 2 corresponding to the apertures of the insert portion groove 32 and 32'. It can be observed, through Fig. 4A, that the contact portion 14 of the first terminal 10 and the contact portion 14 of the second terminal 20 are located on vertical walls of the identical side in the battery 1, thus external electrical appliances can be electrically connected thereto by the most convenient means of contact. It can be observed, through Fig. 4A, that the insert portion 13 of the first terminal 10 and the insert portion 13 of the second terminal 20 are located on the identical horizontal wall in the battery 1, thus external electrical appliances can be electrically connected thereto by the most convenient means of insertion.

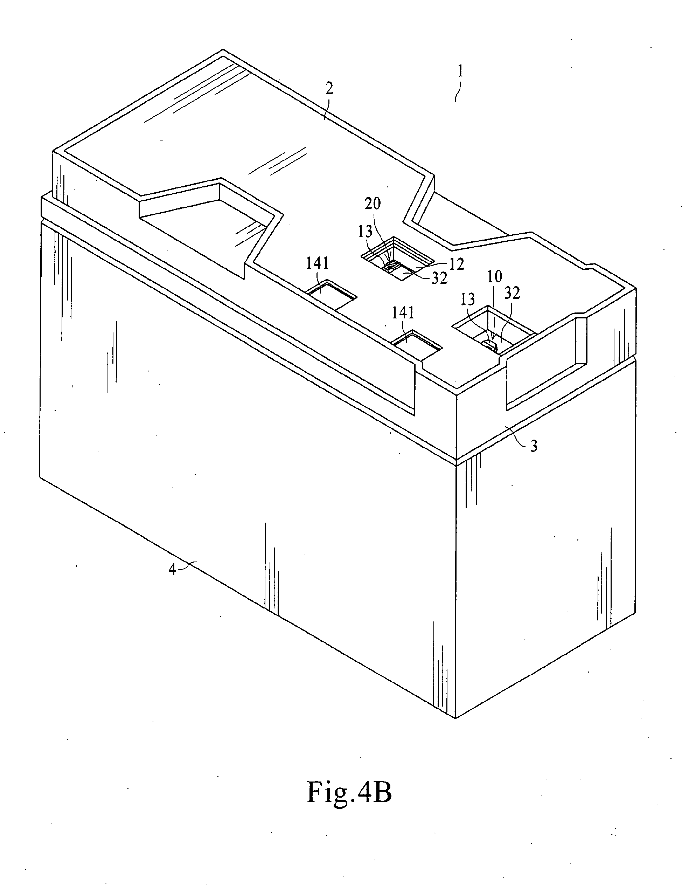

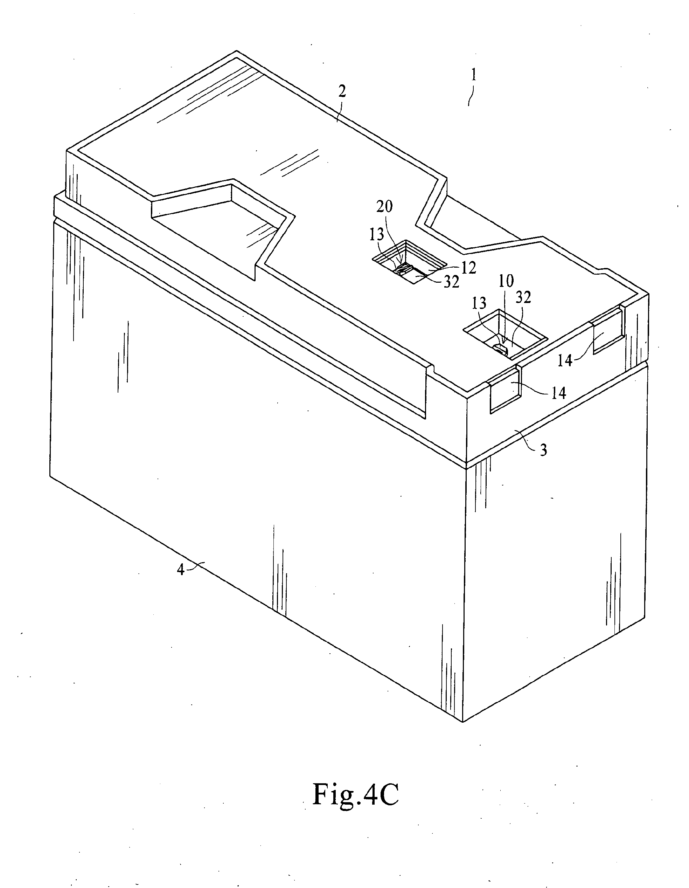

Please continue refer to Fig. 4B and 4C, wherein the other preferred embodiments are shown to manifest the differences regarding the disposing positions of insert portion and the contact portion in the present invention between Fig. 4A and both Fig. 4B and Fig. 4C. As shown in Fig. 4B, the disposing position for the contact portion is altered to be on the top cover 2 of the battery, and the upper contact faces 141 of both the first terminal 10 and the second terminal 20 are to be utilized as the contact portion. In other words, the original contact portion 14 having contacting function is to be concealingly disposed inside the middle cover 3 or can be discarded. In addition, as shown in Fig. 4C, a pair of contact portions 14 as positive and negative electrodes is located on the vertical wall on the other side of the battery 1, which is unidentical to that in Fig. 4A. In this embodiment, the joint portion of the first terminal and the joint portion of the second terminal have different types of deflection so as to cope with the need to dispose the contact portions at different positions.

It goes without saying that the disposition of terminals of battery in the present invention is not limited to embodiments provided above, so the position terminals are disposed thereat can vary in accordance with different needs of users, for example, the insert portion and the contact portion of the identical terminal can be positioned on opposite vertical walls respectively or adjacent vertical walls; in addition, the stopper proximately jointed to the engaging portion can be altered to be disposed at the position proximately jointing to the insert portion, or the insert portion can be further disposed with a pair of stoppers. Furthermore, not only do the contact portion, the insert portion, the engaging portion and the joint portion can be integrally formed, but each portion can also be respectively fabricated and soldered all together to form an integral body.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

## Claims

1. A terminal, comprising the contact portion, the insert portion, the engaging portion and the joint portion, said joint portion utilized for jointing said contact portion, said insert portion and said engaging portion, said contact portion providing external electrical appliances with electrical connection through means of contact, said insert portion providing external electrical appliances with electrical connection through means of insertion, said engaging portion being engaged on the terminal post of batteries so that electricity from batteries being transmitted by said joint portion to said contact portion and said insert portion through said engaging portion.

2. The terminal as in claim 1, wherein said contact portion is further disposed with stoppers utilized for positioning said contact portion at the middle cover of the battery.

3. The terminal as in claim 1, wherein said engaging portion is further disposed with stoppers utilized for positioning said engaging portion at the middle cover of the battery.

4. The terminal as in claim 1, wherein said contact portion, said insert portion, said engaging portion and said joint portion are integrally formed.

5. The terminal as in claim 1, wherein said contact portion, said insert portion, said engaging portion and said joint portion are individual portions being soldered together to form an integral body.

6. A battery having terminals, comprising a pair of terminals and a battery having an top cover, a middle cover and a main body, said pair of terminals utilized respectively for positive and negative electrodes, comprising the contact portion, the insert portion, the engaging portion and the joint portion, said joint portion utilized for jointing said contact portion, said insert portion and said engaging portion, said contact portion providing external electrical appliances with electrical connection through means of contact, said insert portion providing external electrical appliances with electrical connection through means of insertion, said engaging portion being engaged on the terminal post of batteries so that electricity from batteries being transmitted by said joint portion to said contact portion and said insert portion through said engaging portion, said middle cover comprising the engaging portion groove, the insert portion groove, the joint portion groove and the contact portion groove, utilized for accommodating said engaging portion, said insert portion, said joint portion and said contact portion of said pair of terminals correspondingly.

7. The battery having terminals as in claim 6, wherein said contact portions of terminals are further disposed with stoppers utilized for fastening said contact portions in the stopper grooves mounted at said middle cover of the battery.

8. The battery having terminals as in claim 6, wherein said engaging portions of terminals are further disposed with stoppers utilized for fastening said engaging portions in the stopper grooves mounted at said middle cover of the battery.

9. The battery having terminals as in claim 6, wherein said contact portion, said insert portion, said engaging portion and said joint portion of the terminals are integrally formed.

10. The battery having terminals as in claim 6, wherein said contact portion, said insert portion, said engaging portion and said joint portion of the terminals are individual portions being soldered together to form an integral body.
